# EUROPEAN PATENT APPLICATION

(11) **EP 2 068 329 A1**
(43) Date of publication of application: **10.06.2009**
(21) Application number: 06791059.6
(22) Date of filing: 21.09.2006
(51) Int. Cl.: H01B 13/22, B29C 35/08, B29C 47/02, B29C 47/06, C08J 3/24, C08J 3/28

(54) **MANUFACTURE METHOD FOR WIRE CABLE INSULATED BY UV CROSSLINKED POLYOLEFIN AND UV IRRADIATION CROSSLINK EQUIPMENT**

(30) Priority: 06.09.2006 CN 200610126942
(71) Applicant: University of Science and Technology of China, Anhui 230026 (CN); Heilongjiang World Electric Cable Co Ltd, Heilongjiang 154004 (CN)
(72) Inventor: QU, Baojun, Hefei, Anhui 230026 (CN); WU, Qianghua, Hefei, Anhui 230026 (CN); LIANG, Renyou, Hefei, Anhui 230026 (CN); QU, Xin, Hefei, Anhui 230026 (CN); SHI, Wenfang, Hefei, Anhui 230026 (CN); BAO, Wenbo, Jiamusi, Heilongjiang 154004 (CN); MA, Shujun, Jiamusi, Heilongjiang 154004 (CN); JIA, Zhenshan, Jiamusi, Heilongjiang 154004 (CN)
(74) Representative: Gonzalez-Alberto Rodriguez, Natalia
(86) International application number: PCT/CN2006/002468
(87) International publication number: WO 2008/028340

(57) **Abstract**

A manufacture method for a wire cable insulated by an UV crosslinked polyolefin comprises the following steps: the base materials and the additional materials for the polyolefin are mixed and kneaded to form granules, immediately after coating an internal shield layer and an insulating layer on a conductive core by melt common extrusion, in an UV irradiation crosslink equipment that apply an electrodeless lamp excitated by microwaves and whose UV intensity is up to 1800 mW/cm2 as the light source, the insulating layer is UV crosslinked by UV irradiation in an UV irradiation chamber that is formed in a module unit manner, then, a outer shield layer is coated on the UV crosslinked insulating layer by extrusion, and the resultant cable is subsequently processed. An UV irradiation crosslink equipment can be used for this method. By applying this method and the equipment for it, the UV crosslink rate is improved, and not only a 10-66UV middle or high voltage crosslinked polyolefin insulated cable that more than 3mm in thickness but also a low voltage crosslinked polyolefin insulated cable that in different color is made.

## Description

### Technical Field

This invention belongs to the technical area of manufacturing crosslinked polyolefin insulated wire and cable. More especially, this invention relates to a production method of photocrosslinked polyolefin insulated wire and cable and its ultraviolet (UV) light irradiation crosslinking apparatus.

### Background

At present, the main crosslinking methods of polymer insulation and sheath have peroxide crosslinking, high energy radiation crosslinking, silane crosslinking, and photocrosslinking by UV light. Peroxide crosslinking is usually carried out in the continuous vulcanization pipe of high temperature and high pressure, which needs special equipment and factory occupied large area. Its heat efficiency and crosslinking rate are quite low. High energy radiation crosslinking needs complex equipment, high primary investment, special workshop and necessary accessories, and critical requirement for safety protection. Silane crosslinking has some shortcomings, such as long crossslinking time, difficult control of processing and operating, and low rank of heat-and pressure-resistant properties for the product.

Chinese patent ZL 981117222.8 has claimed a production method of photocrosslinked polyolefin insulated wire and cable and related UV irradiation crosslinking apparatus. However, some outstanding shortcomings have been found in its practical application: (1) The high pressure mercury lamp used as UV light source in the mentioned-above irradiation crosslinking apparatus emits UV light as well as a mass of infrared light and visible light. Accordingly, the UV light intensity of high pressure mercury lamp is quite low only about 100-450 mW/cm². It is very difficult to obtain high UV light intensity from the existing irradiation crosslinking apparatus based on high pressure mercury lamp because of its configuration. (2) It was reported that the thickness of photocrosslinked polyolefin materials was limited to less than 3 mm by use of the existing irradiation crosslinking apparatus based on high pressure mercury lamp, whereas the insulation thickness of the most medium-high voltage crosslinked polyolefin insulation cable needs higher than 3 mm at least. Therefore, the existing photocrosslinking method is only suitable for producing 1 kV low voltage wire and cable. (3) Owing to colorants can absorb UV light and thus decrease the efficiency of photocrosslinking initiated by photoinitiator, polyolefin containing colorants is very difficult to achieve satisfactory crosslinking degree by the existing irradiation crosslinking apparatus. Therefore, the existing photocrosslinking method and corresponding irradiation crosslinking apparatus is only suitable for the production of colorless low voltage wire and cable, not suitable for the production of colored wire and cable. (4) The compositions of photocrosslinkable polyolefin materials need to be improved. For example, small molecule photoinitiator used in the existing photocrosslinking method has high volatility, poor compatibility with polyolefin resin, and easy to exude from the surface of polymer blends during the storage at room temperature, and thus decreases the photoinitiating efficiency and storage life because of its concentration loss. (5) Low photoinitiated crosslinking efficiency from the low light intensity of high pressure mercury lamp needs long irradiation time to achieve sufficient crosslinking degree, and thus speeds the surface photo- and thermo-oxidation degradation of the crosslinked materials. Two kinds of methods were adopted to decrease this effect in the existing technique: One was the addition of photostabilizer and/or saturated paraffin into the polyolefin materials and another was to take off absorbed surface oxygen by the pre-irradiation of low-pressure mercury lamp. All these methods will decrease the production efficiency and increase the product cost.

### Description

The purpose of this invention is to overcome the mentioned-above shortcomings of the existing photocrosslinkging process and carry through important improvements for the existing UV irradiation apparatus, compositions of photocrosslinkable polyolefin material, and corresponding photocrosslinking technics based on Chinese patent ZL 98111722.8 in order to provide a novel production method of producing photocrosslinked polyolefin insulated medium-high voltage and colored low voltage wire and cable in air and corresponding UV irradiation crosslinking apparatus without the addition of photostabilizer and/or saturated paraffin or by using the pre-irradiation of low-pressure mercury lamp to take off absorbed surface oxygen of insulation layer.

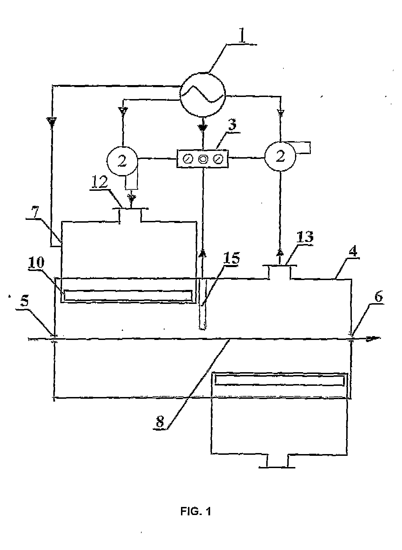

The present invention provides a UV light irradiation crosslinking apparatus of producing photocrosslinked polyolefin insulated wire and cable, which comprises: (1) power supply system, (2) blower system, (3) operation controller system, and (4) UV irradiation box, as shown in Figure 1. The said apparatus is characterized by requirements that the UV light irradiation box (4) is assembled by combination of several, preferred 3-12, microwave excited nonpolar UV lamp units (7) with UV light intensity of higher than 1800 mW/cm², whose lamp units are 40-80 mm away from cable central axis (8), arranged in parallel order along the pulling direction of cable, and distributed equably around the space circularity. Each nonpolar lamp unit has a microwave excited UV lamp (10). The entrance of cooling medium (12) located on the top of each lamp unit (7) is connected with the blower. A reflector (11) with holes or slots is fixed on the back of each lamp (10). The lateral section of the reflector (11) is an ellipse, whose focal length is 40-300 mm and semimajor axis is 30-400 mm. The nonpolar lamp is placed on one of focal points of the ellipse, while the central axis (8) of cable is placed on another focal point.

Either another reflector (16) is placed on the opposite of nonpolar lamp unit. Both the lateral sections of the reflector (16) and the reflector (11) on the back of lamp compose an ellipse, whose focal length is 40-300 mm and semimajor axis is 30-400mm. The lateral section of reflector (11) occupies the majority of the said ellipse, while the lateral section of reflector (16) is the smaller part of the said ellipse. Slot between reflector (11) and reflector (16) is used for ventilation and operation. The nonpolar UV lamp is placed on one of focal points of the said ellipse, while the central axis (8) of cable is placed on another focal point.

The two end faces of UV irradiation box (4) open an entrance (5) and an exit (6) of cable to be crosslinked. The body of UV irradiation box (4) opens an exit (13) of cooling medium, which is fixed with a movable shutter door (14) and is connected actively with the blower. The temperature probe (15) is placed near the axis (8). The height of the base (17) is adjusted to the same height as those of the central axis (8) of cable and the head of the extruder.

According to the UV light irradiation crosslinking apparatus of producing photocrosslinked polyolefin insulated wire and cable described in the present invention, the said power supply system (1) includes power supply of UV light source and blower; blower system (2) includes the inputting blower and outputting vent; operation controller system (3) includes the display of blower current and controller of blower speed, and temperature display.

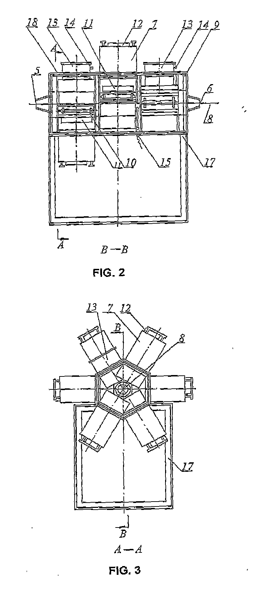

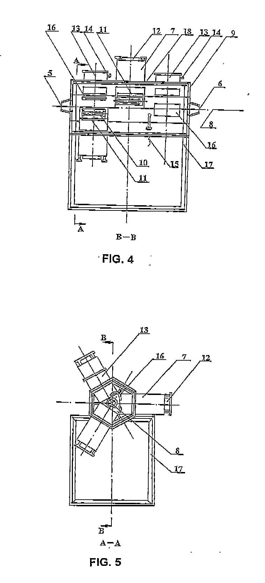

The said combination of nonpolar lamp units can be assembled by 1 nonpolar lamp unit each group or 2 or 3 nonpolar lamp units each group, or their mixing combination of such groups and total numbers of 3-12 nonpolar lamp units. These lamp units are 40-80 mm away from the central axis (8) of cable, arranged in parallel order along pulling direction of cable and distributed equably around the space circularity. For example, the irradiation box is assembled by two nonpolar lamp units each group dislocated 180° and total numbers of six nonpolar lamp units (7) of Type F600, which are arranged in parallel order along the central axis (8) of cable. The lamp units are fixed on the branch shelf and 70 mm away from the central axis (8), as shown in Figure 2. The three groups six nonpolar lamp units are dislocated the angle 60° each other, as shown in the side view of Figure 3 A-A. The six lamp units are arranged equably around the space circularity. Each nonpolar lamp unit has a microwave excited UV lamp (10) with light intensity of higher than 1800 mW/cm². A reflector (11) is fixed on the back of each lamp. Its lateral section is an ellipse, whose focal length is 140 mm and semimajor axis is 88 mm. The nonpolar lamp (10) is placed on one of focal points of the ellipse, while the central axis (8) of cables is placed on another focal point. Or for example again, the irradiation box is assembled by one nonpolar lamp unit each group and total number of three nonpolar lamp units, which are arranged in parallel order along the central axis (8) of cable and distributed equably around the space circularity. The lamp units are fixed on the branch shelf and 55 mm away from the central axis (8), as shown in Figure 4. The three lamp units are dislocated the angle 120° each other, as shown in the side view of Figure 5 A-A. A reflector (11) is fixed on the back of each lamp, while another reflector (16) is placed on the opposite of nonpolar lamp unit. Both lateral sections of the reflector (16) and the reflector (11) on the back of lamp compose an ellipse, whose focal length is 110 mm and semimajor axis is 75 mm. The lateral section of reflector (11) occupies the majority of the above ellipse, while the lateral section of reflector (16) is the smaller part of the ellipse. Slot between reflector (11) and reflector (16) is used for ventilation and operation. The nonpolar lamp is placed on one of focal points of the ellipse, while the central axis (8) of cable is placed on another focal point. The top of reflector (16) opens holes or slots. The entrance of cooling medium (12) is located on the top of each nonpolar lamp unit, which is actively connected with the blower to minimize the shake of blower.

There is an exit (13) of cooling medium on the top of irradiation box and actively connected with the blower. The movable shutter door (14) is placed in the joint of irradiation box with blower and can control the flow throughput of cooling medium by the inserted depth of movable shutter door (14).

The probe (15) of temperature controller (3) is placed near the central axis (8) and its temperature signal transfers to the controller, which adjusts the rotary speed of the blower. The flow throughput of the cooling medium to keep the suitable temperature range of the irradiation regions is controlled by the rotary speed of the blower and the inserted depth of movable shutter door (14).

Air is directly used as cooling medium. When the blower works, the cooling air is forced to input from the entrance (12) on the top of nonpolar lamp unit (7) through reflector (11) and the nonpolar lamp to reach the irradiation regions around the central axis (8), and then expel from exit (13) of air path and bring out the ozone and other evaporable materials in the irradiation region.

The body of irradiation box is made of galvanized iron sheets or aluminium alloy used as shields of the UV light. The inner layer of irradiation box is stuck with the heat-resistant material for safety protection. The upper section of the box is a movable cap (18) in order to replace the conductor wire of products and to maintain and operate the apparatus.

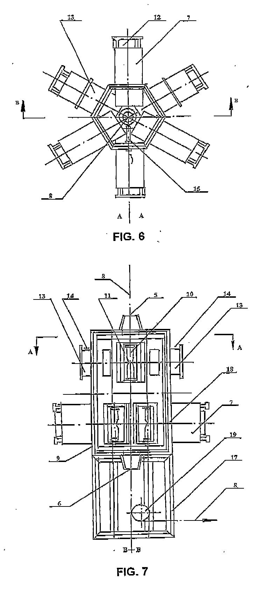

Usually the irradiation box is horizontally placed. However, when the size of cable to be crosslinked is big enough and too heavy, it's better to place the irradiation box vertically, as shown in Figure 6. The exit (13) of cooling medium is placed on the top surface of the box. The cylindrical or other shaped irradiation box is vertically placed in the production line. The cable to be photocrosslinked is pulled along the central axis (8) through irradiation box, as shown in Figure 7. After photocrosslinking, the crosslinked cable is winded directly on disk or turned to horizontal direction by roulette (19) and then winded directly on disk.

The present invention provides a production method of photocrosslinked polyolefin insulated wire and cable, which comprises the following processes:
(1) Mixing and granulating. The compositions B, C, and D are weighted, respectively, according to the ratios by weight, heated, and then mixed homogenously with composition A in a high-speed mixer. The mixture is put into a plasticator preheated to the softening temperature of composition A and the admixture is granulated as particle size as about 2-10 mm³. The said compositions and ratios by weight of photocrosslinkable admixture are as follows:

| | |
|---|---|
| A. polyolefin resin | 100 |
| B. photoinitiator | 0.1-5.0 |
| C. multifunctional crosslinker | 1.0-5.0 |
| D. combined antioxidants | 0.01-1.0 |
| The preferred ratio is: | |
| A. polyolefin resin | 100 |
| B. photoinitiator | 0.7-2.0 |
| C. multifunctional crosslinker | 0.8-3.0 |
| D. combined antioxidants | 0.3-0.8 |

(2). Double layered co-extrusion of inside screen layer and polyolefin insulation layer coated on conductor wire. The inside screen material and the said admixture granules are added into themselves extruders preheated to suitable temperatures, respectively, and then coated on conductor wire by double layered co-extrusion in the melt to form the inside screen layer and insulation layer. The thickness of inside screen layer is 0.2-0.8 inm, while the thickness of insulation layer is 0.4-15 mm.
(3). Photocrosslinking of polyolefin insulation layer. The UV irradiation box of UV irradiation crosslinking apparatus specially designed is placed at 150-700 mm far away from the head of extruder. The polyolefin layer coated on the conductor wire is photocrosslinked for 0.5-2 seconds in the irradiation box when the coated insulation layer is still transparent in the melt without deformation. The nonpolar lamp units are placed at 40-80 mm far from the surface of polyolefin insulation layer. The irradiation temperature in the operating region of cable is controlled in the range of 120-180 °C. The pulling speed of the cable is controlled in the range of 5-40 m/min.
(4) Extrusion of outside screen layer. After photocrosslinking of polyolefin insulation layer, the outside screen layer is immediately coated on the insulation layer. The thickness of outside screen layer is 0.2-10 mm. The mentioned-above (2), (3), and (4) processes of double layered co-extrusion of inside screen layer and insulation layer-photocrosslinking of insulation layer-single layered extrusion of outside screen layer are called as "2+1" photocrosslinking technics.
(5) Finishing process of crosslinked cable. The above photocrosslinked polyolefin insulated cables are armored and/or coated by jacket materials according to the request of finished cable.

The present invention also provides a production method of photocrosslinked polyolefin insulation colored wire and cable, which comprises the following processes:
(1) Mixing and granulating. The compositions B, C, and D are weighted, respectively, according to the ratios by weight, heated, and then mixed homogenously with compositions A and E in a high-speed mixer. The mixture is put into a plasticator preheated to the softening temperature of composition A and granulated as size as about 2-10 mm³. The said compositions and ratios by weight of photocrosslinkable admixture are as follows:

| | |
|---|---|
| A. polyolefin resin | 100 |
| B. photoinitiator | 0.1-5.0 |
| C. multifunctional crosslinker | 1.0-5.0 |
| D. combined antioxidants | 0.01-1.0 |
| E. polyolefin colorant | 0.1-1.0 |
| The preferred ratio is | |
| A. polyolefin resin | 100 |
| B. photoinitiator | 0.7-2.0 |
| C. multifunctional crosslinker | 0.8-3.0 |
| D. combined antioxidant | 0.3-0.8 |
| E. polyolefin colorant | 0.2-0.6 |

(2). Extrusion of insulation layer. The said admixture granules are added into an extruder preheated to suitable temperature and coated on conductor wire to form insulation layer with thickness lower than 3 mm.
(3). Photocrosslinking of polyolefin insulation layer. The UV irradiation box is placed at 150-700 mm far away from the head of extruder. The polyolefin layer coated on the conductor wire is photocrosslinked for 0.5-2 seconds in the irradiation box when the insulation layer is still transparent in the melt without deformation. The nonpolar lamp units are placed at 40-80 mm far from the surface of polyolefin insulation layer. The irradiation temperature in the operating region of cable is controlled in the range of 120-180 °C.
(4) Finishing process of crosslinked cable. The above photocrosslinked polyolefin insulated cable is armored and/or coated by jacket materials according to the request of finished cable.

The said "2+1" photocrosslinking technics in the present invention can be described as the following processes: firstly the inside screen and polyolefin insulation layers are coated on conductor wire by melt double layered co-extrusion; secondly the polyolefin insulation layer in the melt is immediately photocrosslinked in the UV irradiation box, and at last the outside screen is coated on the photocrosslinked insulation layer by single layered extrusion.

The said co-extrusion-coated inside screen and insulation layers imply that the inside screen well known in the area of cable and photocrosslinkable polyolefin admixture granules are added into two themselves extruders preheated to suitable temperature, respectively, and coated on conductor wire by melt double layered co-extrusion to form the inside screen and insulation layers. The thickness of inside screen is 0.2-0.8 mm, while the thickness of insulation layer is 0.4-15 mm.

The said photocrosslinking of polyolefin insulation layer is carried out in the UV irradiation box, which is assembled by the combination of several nonpolar UV lamp units (7), preferred 3-12 units, with UV light intensity higher than 1800 mW/cm². The UV irradiation box is placed at 150-700 mm far away from the head of extruder. The polyolefin insulation layer coated on the conductor wire is photocrosslinked for 0.5-2 seconds when the insulation layer is still transparent in the melt without deformation. The nonpolar UV lamp units are placed at 40-80 mm far from the surface of polyolefin insulation layer. The pulling speed of the cable is controlled in the range of 5-40 m/min depending on the insulation layer thickness of cable, the number of UV lamps, and irradiation time needed for the requested crosslinking degree. The irradiation temperature in the operation region of cable is controlled at the range of melting temperature of photocrosslinkable polyolefin materials. The ellipse lateral section of reflector is fixed at the back of each UV lamp in the irradiation box. The UV lamp is placed on one of focal points of the ellipse, while the central axis of cable is placed on another focal point.

The outside screen layer is coated homogenously on the photocrosslinked insulation layer by use of another extruder. Its thickness is kept at the range of 0.2-1.0 mm.

The said polyolefin resin A in the compositions of photocrosslinkable admixture can be low density polyethylene (LDPE), medium density polyethylene (MDPE), high density polyethylene (HDPE), linear low density polyethylene (LLDPE), ultra low density polyethylene (ULDPE), or copolymers of ethylene with vinyl acetate, acrylic acid ester, methylacrylic acid ester, or propylene; or modified polyethylene grafted by maleic anhydride, fumitory sodium acid, styrene or isobutene; or the blends of the above resin. The preferred polyolefin resin is LDPE, LLDPE, HDPE, or their blends with ethylene-vinyl acetate copolymer (EVA) or ethylene-propane-diene copolymer (EPDM). The preferred ratio of blends is 70/30 by weight.

The said photoinitiator B, whose UV absorbance wavelength is mainly in the range of 250-450 nm, can be divided into photo-fragmentation type and hydrogen abstraction type. The photo-fragmentation type photoinitiator is aliphatic acetone, such as benzyldimethyl-ketal (BDK), dialkoxyacetophenone. The hydrogen abstraction type photoinitiator is aromatic acetone, such as xanthenone, anthraquinone, fluorenone" benzophenone (BP), or benzophenone derivative with long carbon chain as Formula I: 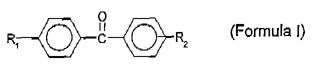 where the substituent R₁ is hydrogen atom, halogen atom or alkyl with 1-4 carbon atoms, R₂ is linear alkyl or alkyoxyl with 6-40, preferred 8-16, carbon atoms. For example, 4-dodecyl-benzophene (BP-D), 4-hexadecoxyl-benzophene, 4'-chloro-4- hexadecoxyl -benzophene.
or Formula II: 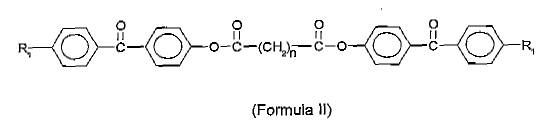 where the substituent R₁ is hydrogen atom, halogen atom or alkyl with 1-4 carbon atoms, n is 8-16. For example, di (4-hydroxyl benzophenone) sebacate (BP-S) or di (4-hydroxyl benzophenone) suberate.

The said multifunctional crosslinker C can be triallyl cyanurate (TAC), triallyl isocyanurate (TAIC), trimethylolpropane triacrylate (TMPTA), trimethylolpropane trimethyl acrylate, trimethylolpropane triallyl ether (TMPAE), pentaerythritol triallyl ether (PETAE), pentaerythritol pentaallyl ether, triethylene glycol methyleacrylate (TEGMA), or their mixture. The preferred one is triallyl cyanurate, or triallyl isocyanurate, while its preferred amount is 0.8-3.0 by weight of one hundred polyolefin resin.

The said combined antioxidants D can be a mixture of two and more phenolic, phosphite, phosphate, thioester antioxidant. The phenolic antioxidants include 2,6-di-tert-butyl phenol, 2,4,6-tri-tert-butyl phenol (antioxidant 246), 4,4'-thiobis-(6-tert-butyl-3-methyl-phenol) (antioxidant 300) or penta (methylene-3-(3',5'-di-tert-4'-hydroyl-phenyl) acrylic acid) pentaerythritol ether (Irganox 1010). The phosphite and phosphate antioxidants include triphenyl phosphite (TPP), tri(2,4-di-tert-butyl- phenyl) phosphite (antioxidant 168), tri(iso-octadyl) phosphite (TIOP), or triphenyl phosphate. The thioester antioxidant includes dilauryl thiodipropinate (DLTP), or lauryl octadecyl thiodipropinate (LSTP) or ditridecyl thiodipropinate (DTDTP). The preferred one is the mixture of penta (methylene-3-(3',5'-di-tert-4'-hydroyl-phenyl) acrylic acid) pentaerythritol ether (Irganox 1010) and triphenyl phosphite (TPP), tri(2,4-di-tert-butyl-phenyl) phosphite (antioxidant 168), or dilauryl thiodipropinate (DLTP). The preferred ratio is 1:1.

The polyolefin colorant E, which is a well-known additive in the cable industry, can be red, yellow, blue, green, or white color, which depends on the request of products. The perferred amount of colorant is 0.2-0.6 by weight per hundred resins.

The present invention provides a production method of photocrosslinked polyolefin insulated wire and cable and related UV light irradiation crosslinking apparatus, which has some unique advantages, such as simple equipment, novel technology, much low primary investment, easy to operation and maintains, high crosslinking efficiency, low cost and good quality of products.

Compared with the existing UV irradiation crosslinking apparatus based on high pressure mercury lamp, the microwave excited nonpolar lamp is used as the light source of UV irradiation crosslinking apparatus in the present invention, which emits less infrared light and more UV light. Its light intensity is higher than 1800 mW/cm². Therefore, the high light intensity greatly increases its penetration ability in photocrosslinkable polyolefin material. The thickness of homogeneous crosslinking in the colorless polyolefin materials increases to more than 15 mm from the existing 3 mm reported in Chinese patent ZL 981117222.8, whereas the polyolefin materials containing different organic colorants can be also homogeneously crosslinked to the satisfactory crosslinking degree. At the same time, the high light intensity considerably increases the photoinitiated crosslinking rate and shortens the required UV irradiated time to 0.5-2.0 seconds from the existing 8-10 seconds for obtaining the satisfactory crosslinking degree of photocrosslinked cable.

Compared with the existing production method of photocrosslinked polyolefin insulated wire and cable, the present invention provides a novel "2+1" photocrosslinking technics, which can avoid the UV absorbance of carbon black in the outside screen layer and ensure the UV absorbance of photinitiator to initiate the photocrosslinking of polyolefin insulation layer, and thus realize the photocrosslinking production of 10-66 kV medium-high voltage crosslinked polyolefin insulated cables of 3-15 mm insulation thickness with inside and outside screen layers. The said "2+1" photocrosslinking technics implies that firstly the inside screen layer and insulation layer are coated on conductor wire by double layered co-extrusion in the melt. Secondly the insulation layer is immediately photocrosslinked in the irradiation box when it is still transparent in the melt without deformation. Subsequently the outside screen layer is coated on the photocrosslinked insulation layer. The production technics and corresponding irradiation apparatus of the present invention can also carry out the production of colored low voltage crosslinked polyolefin insulated wire and cable by adding the desired organic colorants. The present invention can greatly minimize the surface photo- and thermo-oxidation degradation of insulation materials because of the fast photocrosslinking rate and < 2 s short UV light irradiation time and make it possible that photocrosslinking of polyolefin can be carried out in air without the special additives, such as photostabilizer and/or saturate paraffin or special pre-treatment by low pressure mercury lamp, as described in Chinese Patent ZL 98111722.8, and thus predigest the production process and depress the productive cost. The preferred photoinitiators used in this invention are benzophenone derivatives with long carbon chain, which are of good compatibility with polyolefin resin, low migration rate, and low loss of volatility. This kind of new photoinitiator increases the storage life of photocrosslinkable polyolefin admixture and decrease the volatilization loss of photoinitiator during processing, which not only can prolong the life of UV lamp, but also decrease the environment pollution.

### Brief description of the figures

Figure 1 A configuration sketch map of the UV light irradiation crosslinking apparatus.
Figure 2 A configuration sketch map of the UV light irradiation box in Figure 1.
Figure 3 A side view from the A-A profile of UV light irradiation box.
Figure 4 A configuration sketch map of the horizontal UV light irradiation box.
Figure 5 A side view from the A-A profile of the horizontal UV light irradiation box.
Figure 6 A configuration sketch map of the vertical UV light irradiation box.
Figure 7 A side view from the A-A profile of the vertical UV light irradiation box.

### Description of preferred embodiments

The following examples combined with the attached figures illustrate this invention:

### Example 1

This example provides the horizontal irradiation box (4) of the irradiation crosslinking apparatus assembled by three groups of F600 type nonpolar UV lamp units and two units each group dislocated 180° each other. The six lamp units of three groups dislocated the angle 60° each other are fixed on the branch shelf and 70 mm away from the central axis (8), as shown in Figure 2. These lamp units are arranged in parallel order along the pulling direction of cable and distributed equably around the 360° space circularity, as shown in a side view of Figure 3 A-A. Each nonpolar UV lamp unit (7) has a microwave excited UV lamp (10) with UV light intensity higher than 1800 mW/cm². A reflector (11) is fixed on the back of nonpolar lamp (10), whose lateral section is an ellipse with focal length of 140 mm and semimajor axis of 88 mm. Nonpolar lamp (10) is placed on one of focal points, while the central axis (8) of cable is placed on another focal point of the ellipse in order to ensure UV light focusing onto the surface of cable. The top of reflector (11) opens holes or slots, which can exhale quantity of heat without effecting the light utilization. The top of each nonpolar UV lamp unit (7) opens an entrance of cooling medium (12), which is actively connected with the blower to minimize the effect of blower shake on the UV irradiation area.

The top of irradiation box (4) opens the exit of cooling medium (13), which is actively connected with the blower. The movable shutter (14) is placed in the joint of irradiation box with blower. The flow throughput of cooling medium can be controlled by the inserted thickness of movable shutter (14).

The probe (15) of temperature controller (3) is placed near the central axis (8) and its temperature signal transfers to the controller, which adjusts the rotary speed of the blower. The flow throughput of the cooling medium to keep the suitable temperature range of the irradiation regions is controlled by the rotary speed of the blower and the inserted depth of movable shutter door (14).

Air is directly used as cooling medium. When the blower works, the cooling air is forced to input from the entrance (12) on the top of nonpolar lamp unit through reflector (11) and the nonpolar lamp to reach the irradiation regions around the central axis (8), and then expel from exit (13) of air path and bring out the ozone and other evaporable materials in the irradiation region.

The height of the base (17) is adjusted to the same height as those of the central axis (8) of cable and the head of the extruder.

The body of irradiation box is made of galvanized iron sheets or aluminium alloy used as shields of the UV light. The inner layer of irradiation box is stuck with the heat-resistant material for safety protection. The upper section of the box is a movable cap (18) in order to replace the conductor wire of products and to maintain and operate the apparatus.

### Example 2

This example provides the irradiation box (4) assembled by three LH10 type nonpolar UV lamp units (7), which are fixed on the branch shelf (9), 55 mm away from the central axis (8), and arranged in parallel order along the pulling direction of cable, as shown in Figure 4. The three lamp units (7) are dislocated the angle 120° each other and distributed equably around the space circularity, as shown in the side view of Figure 5A-A. Each nonpolar UV lamp unit (7) has a microwave excited UV lamp (10) with UV light intensity higher than 1800 mW/cm². A reflector (11) is fixed on the back of nonpolar lamp (10), Another reflector (16) is placed in the opposite of each nonpolar UV lamp unit. The lateral section of reflector (16) and reflector (11) composes an ellipse, whose focal length is 110 mm and semimajor axis is 75 mm. The lateral section of reflector (11) occupies the majority of the ellipse, while the lateral section of reflector (16) is the smaller part of the ellipse. Nonpolar lamp (10) is placed on one of focal points, while the central axis (8) of cables is placed on another focal point of the ellipse in order to ensure UV light focusing onto the surface of cable. The top of each nonpolar UV lamp unit (7) opens an entrance of cooling medium (12), which is actively connected with the blower to minimize the effect of blower shake on the UV irradiation area.

The top of irradiation box (4) opens the exit of cooling medium (13), which is actively connected with the blower. The movable shutter (14) is placed in the joint of irradiation box with blower. The flow throughput of cooling medium can be controlled by the inserted thickness of movable shutter (14).

The probe (15) of temperature controller (3) is placed near the central axis (8) and its temperature signal transfers to the controller, which adjusts the rotary speed of the blower. The flow throughput of the cooling medium to keep the suitable temperature range of the irradiation regions is controlled by the rotary speed of the blower and the inserted deep of movable shutter (14).

Air is directly used as cooling medium. When the blower works, the cooling air is forced to input from the entrance (12) on the top of nonpolar lamp unit through reflector (11) and the nonpolar lamp to reach the irradiation regions around the central axis (8), and then expel from exit (13) of air path and bring out the ozone and other evaporable materials in the irradiation region.

The height of the base (17) is adjusted to the same height as that of the central axis (8) of cable and the head of the extruder.

The body of irradiation box is made of galvanized iron sheets or aluminium alloy used as shields of the UV light. The inner layer of irradiation box is stuck with the heat-resistant material for safety protection. The upper section of the box is a movable cap (18) in order to replace the conductor wire of products and to maintain and operate the apparatus.

### Example 3

The manufacture of YJLV22-6.6/10 KV 3×50 photocrosslinked polyethylene insulated power cable is as follows:
(1) Compositions and ratios of photocrosslinkable polyolefin admixture (wt %)

| | |
|---|---|
| A. LLDPE 100 | C. TAIC 1.5 |
| B. BP-D 1.5 | D. Antioxidant 1010 0.3 + DLTP 0.3 |

(2) Mixing and granulation. The compositions B, C, and D are weighted according to the following ratios and mixed homogeneously with composition A in high-speed mixer. Then the mixture is extruded in a plasticator preheated to the softening temperature of composition A and granulated as size as about 4 mm³.
(3) Double layered co-extrusion of inside screen layer and polyolefin insulation layer on conductor wire. The inside screen material and the mentioned-above admixture granules are added into themselves extruders preheated to 130-160°C, respectively, and coated on aluminium conductor wire of 50 mm² section by double layered co-extrusion at 160-190 °C to form the inside screen layer and insulation layer. The thickness of insulation layer is 4.5 mm.
(4). Photocrosslinking of polyolefin insulation layer. The horizontal UV irradiation crosslinking apparatus, as described in Example 1, is used in the present product. The UV irradiation box is placed at 300 mm far away from the head of extruder. The nonpolar UV lamp units are placed at 70 mm far from the surface of polyolefin insulation layer. The irradiation temperature in the operating region of cable axis is controlled at the range of 120-180 °C. The pulling speed of the cable is 10 m/min.
(5) Extrusion of outside screen layer. After photocrosslinking of polyolefin insulation layer, the outside screen layer is immediately coated on the insulation layer.
(6) Finishing process of crosslinked cable. The above three photocrosslinked cables of 50 mm² section are interwound each other. Then the sheath is extruded and armored on the outside of cables by jacket materials according to the traditional process of power cable.

The related properties of insulation layer material of cable are listed as follows:

| Gel Content (%) | Heat Extension (%) | Tensile Strength (MPa) | | | Elongation at Break (%) | | | Insulation Resistance Ω•cm |
|---|---|---|---|---|---|---|---|---|
| | | Before aging | After aging | The change rate | Before aging | After aging | The change rate | |
| 76 | 105 | 22.0 | 22.8 | +3.6% | 600 | 590 | -1.7% | 2.4×10¹⁶ |

Aging conditions: 135 °C ×168 hours

### Example 4

The manufacture of YJV 35-23/35 kV 3x95 photocrosslinked polyethylene insulated power cable is as follows:
(1) Compositions and ratios of photocrosslinkable polyolefin admixture (wt %)

| | | | | | |
|---|---|---|---|---|---|
| A. | HDPE | 100 | C. | TAIC | 1.5 |
| B. | BP-S | 1.8 | D. | Antioxidant | 1010 0.3 + DLTP 0.3 |

(2) Mixing and granulation. The compositions B, C, and D are weighted according to the following ratios and mixed homogeneously with composition A in high-speed mixer. Then the mixture is extruded in a plasticator preheated to the softening temperature of composition A and granulated as size as about 4 mm³
(3) Double layered co-extrusion of inside screen layer and polyolefin insulation layer on conductor wire. The inside screen material and the above admixture granules are added into themselves extruders preheated to 150-180°C, respectively, and coated on copper conductor wire of 95 mm² section by double layered co-extrusion at 170-210 °C to form the inside screen layer and insulation layer. The thickness of insulation layer is 10.5 mm.
(4). Photocrosslinking of polyolefin insulation layer. The horizontal UV irradiation crosslinking apparatus, as described in Example 1, is used in the present product. The nonpolar UV lamp units are placed at 70 mm away from the surface of polyolefin insulation layer. The irradiation temperature in the operating region of cable is controlled at the range of 120-180 °C. The pulling speed of the cable is 7.5 m/min.
(5) Extrusion of outside screen layer. After photocrosslinking of polyolefin insulation layer, the outside screen layer is immediately coated on the insulation layer.
(6) Finishing process of crosslinked cable. The above three photocrosslinked cables of 95 mm² section are interwound each other. Then the sheath is extruded and armored on the interwound cables by jacket materials according to the traditional process of power cable.
The related properties of insulation layer material of cable are listed as follows::

| Gel Content (%) | Heat Extension (%) | Tensile Strength (MPa) | | | Elongation at Break (%) | | | Insulation Resistance Ω•cm |
|---|---|---|---|---|---|---|---|---|
| | | Before aging | After aging | The change rate | Before aging | After aging | The change rate | |
| 85 | 70 | 28.2 | 29.5 | +4.6% | 480 | 400 | -16.7% | 2.3×10¹⁶ |

Aging conditions: 135 °C×168 hours

### Example 5

The manufacture of YJLW02 38/66 kV 3x185 photocrosslinked polyethylene insulated power cable is as follows:
(1) Compositions and ratios of photocrosslinkable polyolefin admixture (wt %)

| | | | |
|---|---|---|---|
| A. | HDPE | 100 | C. TAIC 1.5 |
| B. | BP-D | 1.6 | D. Antioxidant 300 0.4 + LSTP 0.2 |

(2) Mixing and granulation. The compositions B, C, and D are weighted according to the following ratios and mixed homogeneously with composition A in high-speed mixer. Then the mixture is extruded-in a plasticator preheated to the softening temperature of composition A and granulated as size as about 4 mm³.
(3) Double layered co-extrusion of inside screen layer and polyolefin insulation layer on conductor wire. The inside screen material and the above admixture granules are added into themselves extruders preheated to 150-180°C, respectively, and coated on copper conductor wire of 185 mm² section by double layered co-extrusion at 170-210 °C to form the inside screen layer and insulation layer. The thickness of insulation layer is 13 mm.
(4). Photocrosslinking of polyolefin insulation layer. The horizontal UV irradiation crosslinking apparatus, as described in Example 1, is used in the present product. The nonpolar UV lamp units are placed at 70 mm far from the surface of polyolefin insulation layer. The irradiation temperature in the operating region of cable is controlled at the range of 120-180 °C. The pulling speed of the cable is 4 m/min.
(5) Extrusion of outside screen layer. After photocrosslinking of polyolefin insulation layer, the outside screen layer is immediately coated on the insulation layer.
(6) Finishing process of crosslinked cable. The above three photocrosslinked cables of 95 mm² section are interwound each other. Then the sheath is extruded and armored on the interwound cables by jacket materials according to the traditional process of power cable.
The related properties of insulation layer material of cable are listed as follows:

| Gel Content (%) | Heat Extension (%) | Tensile Strength (MPa) | | | Elongation at Break (%) | | | Insulation Resistance Ω•cm |
|---|---|---|---|---|---|---|---|---|
| | | Before aging | After aging | The change rate | Before aging | After aging | The change rate | |
| 86 | 65 | 28.8 | 29.6 | +2.8% | 450 | 400 | -11.1% | 2.5×10¹⁶ |

Aging conditions: 135 °C×168 hours

### Example 6

The manufacture of YJV-0.6/1 kV 4x95 + 1x25 photocrosslinked polyethylene insulated power cable is as follows:
(1) Compositions and ratios of photocrosslinkable polyolefin admixture (wt %)

| | | | |
|---|---|---|---|
| A. | LLDPE | 70 + EVA 30 | C. TAC 1.5 |
| B. | BP-D | 1.5 | D. Antioxidant 246 0.2 + DLTP 0.3 |

(2) Mixing and granulation. The compositions B, C, and D are weighted according to the following ratios and mixed homogeneously with composition A in high-speed mixer. Then the mixture is extruded in a plasticator preheated to the softening temperature of composition A and granulated as size as about 4 mm³.
(3) Extrusion of polyolefin insulation layer by extrusion. The above admixture granules are added into an extruders preheated to 130-160°C and coated on aluminium conductor wire of 50 mm² or 25 mm² section by extrusion at 160-190 °C to form the insulation layer. The thickness of insulation layer is 1.0 mm for 50 mm² section or 0.8 mm for 50 mm² section of cables.
(4). Photocrosslinking of polyolefin insulation layer. The horizontal UV irradiation crosslinking apparatus, as described in Example 2, is used in the present product. The UV irradiation box is placed at 300 mm far away from the head of extruder. The nonpolar UV lamp units are placed at 55 mm away from the surface of polyolefin insulation layer. The irradiation temperature in the operating region of cable is controlled at the range of 120-180 °C. The pulling speed of the cable is 30 m/min.
(5) Finishing process of crosslinked cable. The above four photocrosslinked cables of 50 mm² section and one photocrosslinked cable of 25 mm² section are interwound each other. Then the sheath is extruded and armored on the interwound cables by jacket materials according to the traditional process of power cable.

The related properties of insulation layer material of cable are listed as follows:

| Gel Content (%) | Heat Extension (%) | Tensile Strength (MPa) | | | Elongation at Break (%) | | | Insulation Resistance Ω•cm |
|---|---|---|---|---|---|---|---|---|
| | | Before aging | After aging | The change rate | Before aging | After aging | The change rate | |
| 82 | 66 | 19.8 | 20.7 | +4.5% | 630 | 600 | -4.8% | 3.0×10¹⁶ |

Aging conditions: 158 °C×168 hours

### Example 7

The manufacture of YJV22 0.6/1 kV 3x50 colored photocrosslinked polyethylene insulated power cable is as follows:
(1) Compositions and ratios of photocrosslinkable polyolefin admixture (wt %)

| | | |
|---|---|---|
| A. | HDPE 70 + EPDM 30 | D. Antioxidant 1010 0.25 + TPP 0.25 |
| B. | BP 0.5 + BDK 0.5 | E. Red, or Yellow, or Green colorant 0.3 |
| C. | TAIC 2.0 | |

(2) Mixing and granulation. The compositions B, C, and D are weighted according to the following ratios and mixed homogeneously with composition A and E in high-speed mixer. Then the mixture is extruded in a plasticator preheated to the softening temperature of composition A and granulated as size as about 4 mm³.
(3) Extrusion of polyolefin insulation layer. The above admixture granules are added into an extruders preheated to 150-180°C and coated on copper conductor wire of 50 mm² at 170-210 °C to form the insulation layer. The thickness of insulation layer is 1.0 mm.
(4). Photocrosslinking of polyolefin insulation layer. The horizontal UV irradiation crosslinking apparatus, as described in Example 2, is used in the present product. The UV irradiation box is placed at 300 mm away from the head of extruder. The nonpolar UV lamp units are placed at 55 mm away from the surface of polyolefin insulation layer. The irradiation temperature in the operating region of cable is controlled at the range of 120-180 °C. The pulling speed of the cable is 30 m/min.
(5) Finishing process of crosslinked cable. The above three photocrosslinked cables of 50 mm² section with different colors are interwound each other. Then the sheath is extruded and armored on the interwound cables by jacket materials according to the traditional process of power cable.

The related properties of insulation layer material of cable are listed as follows::

| Color | Gel Content (%) | Heat Extension (%) | Tensile Strength (MPa) | | | Elongation at Break (%) | | |
|---|---|---|---|---|---|---|---|---|
| | | | Before aging | After aging | The change rate | Before aging | After aging | The change rate |
| Red | 84 | 70 | 23.9 | 24.5 | +2.5% | 600 | 620 | +3.3 % |
| Yellow | 80 | 75 | 24.1 | 25.7 | +6.6% | 620 | 630 | +1.6 % |
| Green | 78 | 85 | 25.2 | 24.3 | -3.6 % | 615 | 620 | +0.8 % |

Aging conditions: 145 °C×168 hours

### Example 8

The manufacture of KYJV22-450/750 4×2.5 colored photocrosslinked polyethylene insulated control cable is as follows:
(1) Compositions and ratios of photocrosslinkable polyolefin admixture (wt %)

| | | | |
|---|---|---|---|
| A. | LDPE | 100 | D. Antioxidant 1010 0.4 + DLTP 0.2 |
| B. | BP-D | 1.6 | E. Red, or Yellow, or Blue, or Green colorant 0.3 |
| C. | TAIC | 2.0 | |

(2) Mixing and granulation. The compositions B, C, and D are weighted according to the following ratios and mixed homogeneously with composition A and E in high-speed mixer. Then the mixture is extruded in a plasticator preheated to the softening temperature of composition A and granulated as size as about 4 mm³.
(3) Extrusion of polyolefin insulation layer. The above admixture granules are added into an extruders preheated to 130-160°C and coated on copper conductor wire of 2.5 mm² at 150-180 °C to form the insulation layer. The thickness of insulation layer is 0.8 mm.
(4). Photocrosslinking of polyolefin insulation layer. The horizontal UV irradiation crosslinking apparatus, as described in Example 2, is used in the present product. The UV irradiation box is placed at 300 mm far away from the head of extruder. The nonpolar UV lamp units are placed at 55 mm away from the surface of polyolefin insulation layer. The irradiation temperature in the operating region of cable is controlled at the range of 120-180 °C. The pulling speed of the cable is 30 m/min.
(5) Finishing process of crosslinked cable. The above four photocrosslinked cables of 2.5 mm² section with different colors are interwound each other. Then the sheath is extruded and armored on the interwound cables by jacket materials according to the traditional process of power cable.

The related properties of insulation layer material of cable are listed as follows:

| Color | Gel Content (%) | Heat Extension (%) | Tensile Strength (MPa) | | | Elongation at Break (%) | | |
|---|---|---|---|---|---|---|---|---|
| | | | Before aging | After agin g | The change rate | Before aging | After aging | The change rate |
| Red | 78 | 90 | 19.3 | 20.5 | +6.2 % | 550 | 570 | +3.6 % |
| Yellow | 73 | 95 | 19.5 | 20.8 | +6.7 % | 570 | 580 | +1.7% |
| Blue | 71 | 95 | 20.5 | 21.5 | +4.9 % | 600 | 620 | +3.3 % |
| Green | 76 | 90 | 19.9 | 19.0 | -4.5 % | 580 | 570 | -1.7 % |

Aging conditions: 145 °C ×168 hours

## Claims

1. A ultraviolet (UV) light irradiation crosslinking apparatus of producing photocrosslinked polyolefin insulated wire and cable, which comprises: (1) power supply system; (2) blower system; (3) operation controller system; and (4) UV irradiation box, wherein the said apparatus is **characterized by** requirements that the UV light irradiation box (4) is assembled by combination of several microwave excited nonpolar UV lamp units (7) with UV light intensity of higher than 1800 mW/cm², which are arranged in parallel order along the pulling direction of cable central axis (8) away from definite distance and distributed equably around the space circularity, where each nonpolar lamp unit has a microwave excited UV lamp (10), an entrance of cooling medium (12) connected movably with the blower being located on each nonpolar lamp unit (7); there being holes or slots on the top of a reflector (11) fixed on the back of each lamp, whose lateral section is an ellipse with focal length of 40-300 mm and semimajor axis of 30-400 mm; the nonpolar lamp (10) being placed on one of focal points of the ellipse, while the central axis (8) of cable to be crosslinked being placed on another focal point;
Either another reflector (16) is placed on the opposite of nonpolar lamp unit (7), whose lateral sections and that of reflector (11) on the back of lamp compose an ellipse with focal length of 40-300 mm and semimajor axis of 30-400 mm; in which the lateral section of reflector (11) occupies the majority of the said ellipse, while the lateral section of reflector (16) is the smaller part of the said ellipse; slit existed between reflector (11) and reflector (16) used for ventilation and operation; the nonpolar lamp (10) being placed on one of focal points of the ellipse, while the central axis (8) of cable being placed on another focal point;
Two end faces of UV irradiation box (4) open an entrance (5) and an exit (6) of cable to be crosslinked, respectively, and the body of the irradiation box (4) has an exit (13) of cooling medium and a movable shutter door (14) connected movably with a blower; the temperature probe (15) is placed near the axis (8); the height of the base (17) can be adjusted to the same height as those of the central axis (8) of cable and the head of the extruder.

2. The UV light irradiation crosslinking apparatus of producing photocrosslinked polyolefin insulated wire and cable as claimed in Claim 1, which is **characterized by** 3-12 nonpolar UV lamp units assembled by 1 nonpolar lamp unit each group and total amounts of 3, 4, 5, 6, 7, 8, 9, 10, 11, 12 nonpolar lamp units, or 2 nonpolar lamp units each group and total amounts of 4, 6, 8, 10, 12 nonpolar lamp units, or 3 nonpolar lamp units each group and total amounts of 3, 6, 9, 12 nonpolar lamp units, or the combination of such groups, respectively, wherein these nonpolar lamp units being arranged in parallel order along the pulling direction of cable central axis (8) away from 40-80 mm and distributed equably around the space circularity.

3. The UV light irradiation crosslinking apparatus of producing photocrosslinked polyolefin insulated wire and cable as claimed in Claim 1, which is **characterized by** two nonpolar lamp units each group dislocated 180° and total amounts of six nonpolar lamp units fixed on the branch shelf, arranged in parallel order along the pulling direction of cable central axis (8) away from 70 mm, dislocated the angle 60° each other, and distributed equably around the space circularity.

4. A UV light irradiation crosslinking apparatus of producing photocrosslinked polyolefin insulated wire and cable as claimed in Claim 1, which is **characterized by** one nonpolar lamp units each group and total amounts of three lamp units fixed on the branch shelf, which are arranged in parallel order along the pulling direction of cable central axis (8) away from 55 mm, dislocated the angle 120° each other, and distributed equably around the space circularity.

5. A production method of photocrosslinked polyolefin insulated wire and cable comprises the following processes:
- (1) Mixing and granulating: blending the compositions B, C, and D according to the ratios by weight, heating the blends, and then mixing them homogenously with composition A in a high-speed mixer; putting the mixture into a plasticator preheating to the softening temperature of composition A, extruding and granulating the admixture with particle size of about 2-10 mm³; the said compositions and ratios by weight of photocrosslinkble admixture comprising as follows:
| | |
|---|---|
| A. polyolefin resin | 100 |
| B. photoinitiator | 0.1-5.0 |
| C. multifunctional crosslinker | 1.0-5.0 |
| D. combined antioxidants | 0.01-1.0; |
- (2) Double layered co-extrusion of the inside screen layer and polyolefin insulation layer: preheating the inside screen materials and the said admixture granules to suitable temperatures in themselves extruders, respectively, and coating them onto the conductor wire by melt double layered co-extrusion to form the inside screen layer and insulation layer, in which the thickness of inside screen layer is 0.2-0.8 mm and the thickness of insulation layer is 0.4-15 mm;
- (3) Photocrosslinking of polyolefin insulation layer, wherein the coated insulation layer on the conductor wire is photocrosslinked in the melt by UV light for 0.5-2 seconds in the UV irradiation box being placed at 150-700 mm far away from the head of extruder, where the nonpolar lamp units are 40-80 mm far from the surface of polyolefin insulation layer; the irradiation temperature in the operating region of cable is controlled at the range of 120-180 °C; the pulling speed of the cable is at the range of 5-40 m/min;
- (4) Extrusion of the outside screen layer, where the outside screen layer with thickness of 0.2-1.0 mm is coated on the insulation layer by an extruder immediately after photocrosslinking;.
- (5) Finishing process of the photocrosslinked polyolefin insulated cable according to the request of finished cable, such as armored and/or coated by jacket materials.

6. A production method of photocrosslinked polyolefin insulated wire and cable, which comprises the following processes.
- (1) Mixing and granulating: weighting the compositions B, C, and D, respectively, according to the ratios by weight, and then mixing homogenously with composition A and E in a high-speed mixer; putting the mixture into a plasticator preheating to the softening temperature of composition A, extruding and granulating the admixture with particle size of about 2-10 mm³; the said compositions and ratios by weight of photocrosslinkble admixture comprising as follows:
| | |
|---|---|
| A. polyolefin resin | 100 |
| B. photoinitiator | 0.1-5.0 |
| C. multifunctional crosslinker | 1.0-5.0 |
| D. combined antioxidants | 0.01-1.0 |
| E. polyolefin colorant | 0.1-1.0; |
- (2) Extrusion process of the insulation layer, wherein the said admixture granules are added into an extruder preheated to suitable temperature and coated on conductor wire to form insulation layer with thickness less than 3 mm;
- (3) Photocrosslinking of polyolefin insulation layer, wherein the coated insulation layer on the conductor wire is photocrosslinked in the melt by UV light for 0.5-2 seconds in the UV irradiation box being placed at 150-700 mm away from the head of extruder, where the nonpolar lamp units are 40-80 mm far from the surface of polyolefin insulation layer; the irradiation temperature in the operating region of cable is controlled at the range of 120-180 °C;
- (4) Finishing process of the photocrosslinked polyolefin insulated cables according to the request of finished cable, such as armored and/or coated by jacket materials.

7. The production method of photocrosslinked polyolefin insulated wire and cable as claimed in Claim 5 or Claim 6, wherein the compositions and preferred ratios by weight of photocrosslinkable admixture are **characterized by** as follows:
| | |
|---|---|
| A. polyolefin resin | 100 |
| B. photoinitiator | 0.7-2.0 |
| C. multifunctional Crosslinker | 0.8-3.0 |
| D. combined antioxidants | 0.3-0.8 |
or
| | |
|---|---|
| A. polyolefin resin | 100 |
| B. photoinitiator | 0.7-2.0 |
| C. multifunctional crosslinker | 0.8-3.0 |
| D. combined antioxidants | 0.3-0.8 |
| E. polyolefin colorant | 0.2-0.6. |

8. The production method of photocrosslinked polyolefin insulated wire and cable as claimed in Claim 5 or Claim 6, wherein the said compositions of photocrosslinkable admixture are **characterized by** as follows:
- The said polyolefin resin A, which can be low density polyethylene, medium density polyethylene, high density polyethylene, linear low density polyethylene, ultra low density polyethylene; copolymer of ethylene with vinyl acetate, acrylic acid ester, methylacrylic acid ester, or propylene; or modified polyethylene grafted by maleic anhydride, fumitory sodium acid, styrene or isobutene; or their blends of the above two resins or upwards;
- The said photoinitiator B, which can be benzyldimethyl-ketal, dialkoxyacetophenone, xanthenone, anthraquinone, fluorenone, benzophenone, or micromolecular type of benzophenone derivatives with long carbon chain as Formula I: 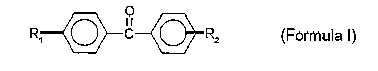
where the substituent R₁ is hydrogen atom, halogen atom or alkyl with 1-4 carbon atoms and R₂ is linear alkyl or alkyoxyl with 6-40 carbon atoms;
or Formula II: 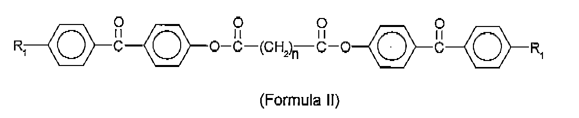 where the substituent R₁ is hydrogen atom, halogen atom or alkyl with 1-4 carbon atoms, and n is 8-16;
- The said multifunctional crosslinker C, which can be triallyl cyanurate, triallyl isocyanurate, trimethylolpropane triacrylate, trimethylolpropane trimethyl acrylate, trimethylolpropane triallyl ether, pentaerythritol triallyl ether, pentaerythritol pentaallyl ether, triethylene glycol methyleacrylate, or their mixture;
- The said combined antioxidants D, which can be compounds of 2,6-di-tert-butyl phenol, 2,4,6-tri-tert-butyl phenol, 4,4'-thiobis-(6-tert-butyl-3-methyl-phenol) or penta (methylene-3-(3',5'-di-tert-4'-hydroyl-phenyl) acrylic acid) pentaerythritol ether combined with triphenyl phosphite, tri(2,4-di-tert-butyl-phenyl) phosphite, tri(iso-octadyl) phosphite, triphenyl phosphate, dilauryl thiodipropinate, or lauryl octadecyl thiodipropinate.

9. The production method of photocrosslinked polyolefin insulated wire and cable as claimed in Claim 8, wherein the said compositions of photocrosslinkable admiture are **characterized by** as follows: the said polyolefin resin A, which can be low density polyethylene, or linear low density polyethylene, or high density polyethylene, or theire blends with ethylene-vinyl acetate copolymer or ethylene-propene-diene copolymer, whose preferred ratio is 70 wt%/30 wt%;
- The said photoinitiator B, which can be 4-dodecyl-benzophene, or 4-hexadecoxyl-benzophene, or 4'-chloro-4- hexadecoxyl-benzophene, or di (4-hydroxyl benzophenone) sebacate or di (4-hydroxyl benzophenone) suberate;
- The said multifunctional crosslinker C, which can be triallyl cyanurate or triallyl isocyanurate;
- The said combined antioxidants D, which can be a mixture of penta (methylene-3-(3',5'-di-tert-4'-hydroyl-phenyl) acrylic acid) pentaerythritol ether and triphenyl phosphite, tri(2,4-di-tert-butyl-phenyl) phosphite, or dilauryl thiodipropinate, whose optimum ratio is 1:1.

10. The production method of photocrosslinked polyolefin insulated wire and cable as claimed in Claim 6 or Claim 7, wherein the polyolefin colorants can be red, yellow, blue, green, and white.
